# EUROPEAN PATENT APPLICATION

(11) **EP 4 332 058 A1**
(43) Date of publication of application: **06.03.2024**
(21) Application number: 22795678.6
(22) Date of filing: 22.04.2022
(51) Int. Cl.: C01B 25/14, C01D 3/12, H01M 4/13, H01M 4/62, H01M 10/0562

(54) **COMPOUND AND BATTERY CONTAINING SAME**

(30) Priority: 26.04.2021 JP 2021074050
(71) Applicant: Idemitsu Kosan Co.,Ltd., Tokyo 100-8321 (JP); Osaka Research Institute of Industrial Science and Technology, Izumi-shi, Osaka 594-1157 (JP)
(72) Inventor: KATO, Atsutaka, Osaka-shi, Osaka 536-8553 (JP); YAMAMOTO, Mari, Osaka-shi, Osaka 536-8553 (JP); TAKAHASHI, Masanari, Osaka-shi, Osaka 536-8553 (JP); UTSUNO, Futoshi, Tokyo 100-8321 (JP); HIGUCHI, Hiroyuki, Tokyo 100-8321 (JP)
(74) Representative: Vossius & Partner Patentanwälte Rechtsanwälte mbB
(86) International application number: PCT/JP2022/018525
(87) International publication number: WO 2022/230765

(57) **Abstract**

One of the purposes of the present invention is to provide: a compound which can be used as a binder having ion conductivity; and a battery which contains the compound. One aspect of the present invention is a compound comprising P and S as constituent elements, a group comprising one or more elements selected from the group consisting of O, N and halogen, the group bonding to the P, and a disulfide bond.

## Description

### Technical Field

The invention relates to a compound and a battery containing the same.

### Background Art

An all-solid-state battery, such as an all-solid-state lithium-ion battery, usually has a positive electrode layer, a solid electrolyte layer (sometimes simply referred to as an "electrolyte layer"), and a negative electrode layer. By having a binder contained in these layers, each layer or a stacked body thereof can be formed into a sheet.

Non-Patent Documents 1 and 2 disclose the polymerization of PS₄ on the surface of an electrode active material. In addition, Non-Patent Document 3 discloses change of a chemical structure of 70Li₂S-30P₂S₅ through heat treatment

### Related Art Documents

### Non-Patent Document

[Non-Patent Document 1] Masato Sumita, and 2 others, "Possible Polymerization of PS4 at a Li3PS4/FePO4 Interface with Reduction of the FePO4 Phase," The Journal of Physical Chemistry C, April 24, 2017, Volume 121, p. 9698-9704
[Non-Patent Document 2] Takashi Hakari, and 9 others, "Structural and Electronic-State Changes of a Sulfide Solid Electrolyte during the Li Deinsertion-insertion Processes," Chemistry of Materials, May 3, 2017, Volume 29, p. 4768-4774
[Non-Patent Document 3] Yuichi Hasegawa, "Chemical Structural Analysis of Sulfide-based Solid Electrolyte 70Li2S-30P2S5," [online], February 1, 2018, Toray Research Center, Inc. [Search on July 9, 2019], Internet <URL:https://www.toray-research.co.jp/technical-info/trcnews/pdf/201802-01.pdf>

### Summary of the Invention

It is conceivable to use polyvinylidene fluoride (PVDF), carboxymethylcellulose (CMC), or the like as a binder. However, such a binder has a problem that ion conductivity decreases when the amount of the binder is increased in order to obtain the bonding property between the materials constituting a layer (for example, an electrode mixture). Therefore, it is desirable to use a compound having ion conductivity and capable of exhibiting a function as a binder

An object of the invention is to provide a compound that can be used as a binder having ion conductivity, and a battery containing the same.

As a result of intensive studies, the inventors have found that a compound containing phosphorus and sulfur as constituent elements and having a disulfide bond can be used as a binder which has ion conductivity, thereby completing the invention.

According to the invention, the following compound and so on can be provided.
1. A compound comprising:
   P and S as constituent elements,
   a group comprising one or more elements selected from the group consisting of O, N and halogen, the group bonding to the P, and
   a disulfide bond.
2. The compound according to 1, wherein the group comprises O.
3. The compound according to claim 1 or 2, having a peak derived from a disulfide bond which bonds two P in Raman spectroscopy.
4. The compound according to any one of 1 to 3, having a peak derived from a PSₓO_{y} structure (where 1 ≤ x and 0 < y) in ³¹P-NMR measurement.
5. The compound according to 4, wherein the peak derived from the PSₓO_{y} structure is a peak derived from a PS₃O structure.
6. The compound according to any one of 1 to 5, comprising a structure represented by the following formula (1): 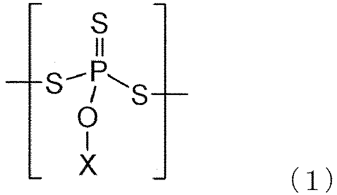 wherein in the formula (1), X is an arbitrary group.
7. The compound according to any one of 1 to 6, comprising a structure represented by the following formula (1) and a structure represented by the following formula (7): 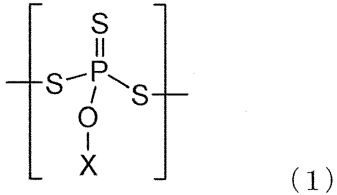 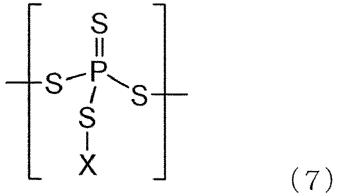 wherein in the formulas (1) and (7), X is an arbitrary group, and a plurality of X's is the same as or different from each other.
8. The compound according to any one of 1 to 7, comprising one or more elements selected from the group consisting of Li, Na, Mg, and Al as constituent elements.
9. The compound according to any one of 1 to 8, wherein the compound is obtained by adding an oxidizing agent to a raw material compound comprising P and S, and one or more elements selected from the group consisting of O, N, and halogen as constituent elements, and then reacting the raw material compound and the oxidizing agent.
10. The compound according to any one of 1 to 9, comprising a disulfide bond formed in accordance with the following Reaction Scheme (9): 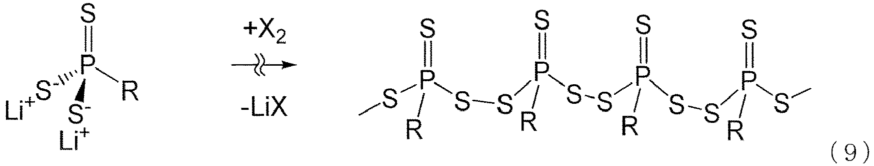 wherein in the Scheme, R is a group comprising one or more elements selected from the group consisting of O, N, and halogen; and X is halogen.
11. The compound according to 10, wherein X in the Reaction Scheme (9) is iodine (I), fluorine (F), chlorine (CI), or bromine (Br).
12. A binder for a battery, comprising the compound according to any one of 1 to 11.
13. The binder for a battery according to 12, comprising a halogen.
14. The binder for a battery according to 13, wherein the halogen is I or Br.
15. A composite electrode layer for a battery or an electrolyte layer for a battery comprising the binder for a battery according to any one of 12 to 14.
16. The composite electrode layer for a battery or the electrolyte layer for a battery according to 15, further comprising a solid electrolyte.
17. A battery sheet comprising one or more layers selected from the group consisting of the composite electrode layer for a battery and the electrolyte layer for a battery according to 15 or 16.
18. A battery comprising the compound according to any one of 1 to 11.
19. A method for producing a compound, comprising:
   adding an oxidizing agent to a raw material compound comprising P and S, and one or more elements selected from the group consisting of O, N, and halogen as constituent elements; and
   reacting the raw material compound and the oxidizing agent.
20. The method for producing a compound according to 19, wherein the raw material compound comprises one or more elements selected from the group consisting of Li, Na, Mg, and Al as constituent elements.
21. The method for producing a compound according to 19 or 20, wherein the raw material compound has a PSₓO_{y} structure (where 1 ≤ x and 0 < y).
22. The method for producing a compound according to 21, wherein the PSₓO_{y} structure is a PS₃O structure.
23. The method for producing a compound according to any one of 19 to 22, wherein the oxidizing agent is a halogen simple substance.
24. The method for producing a compound according to 23, wherein the halogen simple substance is I₂ or Br₂.
25. The method for producing a compound according to any one of 19 to 24, wherein the raw material compound and the oxidizing agent are reacted by one or more energies selected from the group consisting of physical energy, thermal energy, and chemical energy.
26. The method for producing a compound according to any one of 19 to 24, wherein the raw material compound and the oxidizing agent are reacted in a liquid.

According to the invention, a compound that can be used as a binder having ion conductivity, and a battery containing the same can be provided.

### Brief Description of the Drawings

Figure 1 is the Raman spectra of the compounds obtained in Production Example 1 and Examples 1 to 4.
Figure 2 is the Raman spectra of the compounds obtained in Production Example 3 and Example 6.
Figure 3 is the Raman spectrum of the compound obtained in Example 7.
Figure 4 shows the results of powder X-ray analysis of the compounds obtained in Production Example 1 and Examples 1 to 4.
Figure 5 is the solid-state ³¹P-NMR spectra of the compounds obtained in Production Example 1 and Example 1.
Figure 6 is the solid-state ³¹P-NMR spectra of the compounds obtained in Examples 2 to 4.
Figure 7 is the solid-state ³¹P-NMR spectrum of the compound obtained in Example 5.
Figure 8 show the results of the initial charge/discharge of the cells of Example 13 and Comparative Examples 6 and 7.
Figure 9 shows the result of the initial charge/discharge of the cell of Example 14.
Figure 10 is the Cole-Cole plots of the cells of Example 13 and Comparative Examples 6 and 7.
Figure 11 is the Cole-Cole plot of the cell of Example 14.
Figure 12 shows the results of the cycle characteristics of the cells of Example 13 and Comparative Examples 6 and 7.
Figure 13 shows the result of the cycle characteristic of the cell of Example 14.
Figure 14 is the Raman spectra of the compounds obtained in Examples 15 and 16.
Figure 15 shows the result of the XPS measurement in Example 15.
Figure 16 shows the result of the XPS measurement in Example 16.

### Mode for Carrying out the Invention

Hereinafter, the compound, a binder for a battery, a composite electrode layer for a battery, an electrolyte layer, a battery sheet, a battery, and a method for producing a compound according to the invention will be described in detail.

In this specification, "x to y" represents a numerical value range of "x or more and y or less." The upper limits and lower limits stated for the numerical value range can be combined arbitrarily.

Combinations of two or more of the individual embodiments of the invention described later are also embodiments of the invention.

### <Compound α>

The compound according to one aspect of the invention (also referred to as "compound α") contains:
P and S as constituent elements,
a group containing one or more elements selected from the group consisting of O, N and halogen, the group bonding to the P (also referred to as "group R"), and
a disulfide bond.

The compound α has ion conductivity and can be suitably used as a binder such as a binder for a battery. In addition, the compound α can exhibit excellent solubility. This is considered to be due to the fact that, even if the compound α is multimerized, branching of the molecular chain is suppressed, thereby suppressing the formation of a three-dimensional network structure which causes a decrease in solubility.

The group R is not particularly limited as long as the group contains one or more elements selected from the group consisting of O, N, and halogen, and examples thereof include -OM (M is a metal element), halogen, =NH, -N=Y, and -N(Z¹)Z², and the like; wherein Y, Z¹, and Z² will be described later. For -OM, examples of M include Li, Na, Mg, Al, and the like.

In one embodiment, the group R contains one or more elements selected from the group consisting of O and N.

The group R preferably contains O. The group R also preferably contains N.

The group R may be bonded to the P in the compound α via a single bond or a multiple bond (for example, a double bond, a triple bond).

In one embodiment, the O, N or halogen contained in the group R is directly bonded (for example, via a covalent bond) to the P contained in the compound α.

The compound α can have one or more group R's. When the compound α has two or more group R's, the two or more group R's are the same as or different from each other.

In one embodiment, the compound α has a peak derived from a disulfide bond which bonds two P's, which is observed by Raman spectroscopy.

In one embodiment, the compound α has a peak in Raman spectroscopy (hereinafter also referred to as "peak A") in a range of Raman shift 425 cm⁻¹ or more and 500 cm⁻¹ or less, preferably 440 cm⁻¹ or more and 490 cm⁻¹ or less, more preferably 460 cm⁻¹ or more and 480 cm⁻¹ or less.

The peak A is derived from the disulfide bond (S-S) which bonds two P's in the compound α.

The presence of a disulfide bond (S-S) in the compound α may be identified by the presence of the peak A.

In one embodiment, the compound α has a peak in Raman spectroscopy in a range of Raman shift 370 cm⁻¹ or more and less than 425 cm⁻¹, preferably 380 cm⁻¹ or more and 423 cm⁻¹ or less, and more preferably 390 cm⁻¹ or more and 420 cm⁻¹ or less (hereinafter also referred to as "peak B").

The peak B is derived from symmetrical stretching of the P-S bonding in a PSₓO_{y} structure and/or a PS₄ structure described below.

Raman spectroscopy of the compound α is performed by the method described in Examples. At the time, it is important to carry out measurement after the compound α is treated with toluene. This is for the reason why the sulfur simple substance which may be mixed in the compound α is removed. The sulfur simple substance has a peak at the position that may overlap with the peak A. Therefore, by removing the sulfur simple substance, the peak A derived from the compound α can be measured properly. Such a treatment with toluene is performed in accordance with the procedure described in Examples.

In one embodiment, the compound α has a peak derived from a PSₓO_{y} structure (where 1 ≤ x and 0 < y) in ³¹P-NMR measurement.

The PSₓO_{y} structure is not particularly limited.

In one embodiment, the PSₓO_{y} structure is one or more structures selected from the group consisting of a PS₃O structure, a PS₂O₂ structure, and a PSO₃ structure, and a P₂S₆O structure (PS₃O_{1/2} structure), a P₂S₅O₂ structure (PS_{5/2}O), a P₂S₄O₃ structure (PS₂O_{3/2} structure), a P₂S₃O₄ structure (PS_{3/2}O₂ structure), and a P₂S₂O₇ structure (PSO_{7/2} structure) may also be present as structures similar to the structures above.

In one embodiment, the PSₓO_{y} structure is a PSsO structure.

³¹P-NMR measurement can be performed by the methods described in Examples.

In one embodiment, the compound α has one or more structures selected from the group consisting of structures represented by the following formulas (1) to (5). By having one or more of these structures, the effects of the invention can be exhibited more satisfactorily.

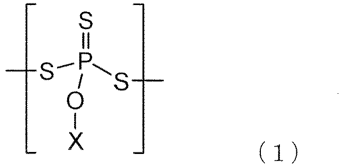

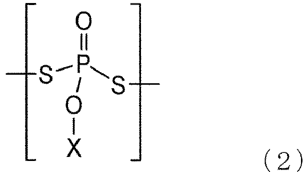

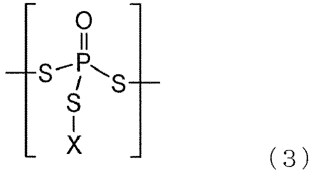

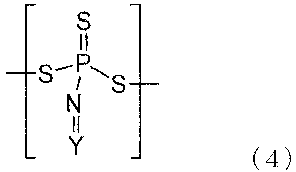

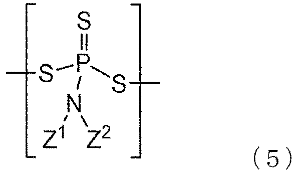

In the formulas (1) to (3), X is an arbitrary group, for example, the metal element M described above. In the formula (4), Y is an arbitrary group, for example, = PS₂. In the formula (5), Z¹ and Z² are independently an arbitrary group, and are the same as or different from each other, and are for example, -PS₃.

The compound α preferably has the structure represented by the formula (1). By having the structure represented by the formula (1), the effects of the invention can be exhibited more satisfactorily.

In one embodiment, the compound α has the structure represented by the following formula (6). By having the structure represented by the formula (6), the effects of the invention can be exhibited more satisfactorily.

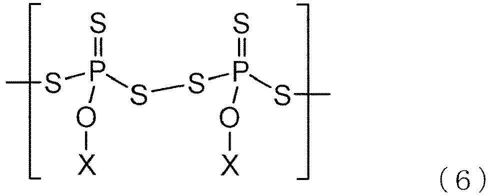

In the formula (6), X is an arbitrary group, for example, the metal element M described above. The two X's are the same as or different from each other.

In one embodiment, the compound α has both the structure represented by the formula (1) and the structure represented by the following formula (7):

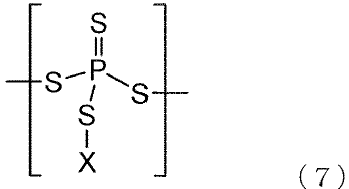

In the formula (7), X is an arbitrary group, for example, the metal element M described above.

Here, in the compound α, the structure represented by the formula (1) can be contained as the structure represented by the formula (6). The compound α can have the structure represented by the formula (1) and the structure represented by the formula (7). In this case, a plurality of X's is the same as or different from each other.

In one embodiment, the structure represented by the formula (1) is contained in the compound α as a repeating unit. In one embodiment, when the compound α has the structure represented by the formula (7), the structure represented by formula (7) is contained in the compound α as a repeating unit.

The presence of the structure represented by each of the formulas (1) to (7) in the compound α can be confirmed by NMR and Raman measurement

In one embodiment, the compound α has one or more elements selected from the group consisting of Li, Na, Mg, and Al, as constituent elements,. In one embodiment, these constituent elements are bonded to S in the compound α via an ionic bond. In addition, when the compound α has O, these constituent elements are bonded to O via an ionic bond to form -0M, which is an example of the group R described above.

### <Binder for battery>

The binder for a battery according to one aspect of the invention (hereinafter, referred to as a binder for a battery (A)) contains the compound α described above. The binder for a battery (A) may further contain a halogen. Such a halogen may be one derived from an oxidizing agent or the like used in the production of the compound α.

The halogen may be one or more elements selected from the group consisting of I, F, Cl, and Br. The halogen may also be I or Br.

The form of the halogen described above is not particularly limited, and may be, for example, one or more selected from the group consisting of salts of a halogen with one or more elements selected from the group consisting of Li, Na, Mg, and Al, and halogen simple substances. Examples of the salt include Lil, Nal, MgI₂, AlI₃, LiBr, NaBr, MgBr₂, AlBr₃, and the like. Among these, LiI and LiBr are preferable from the viewpoint of ion conductivity. Examples of the halogen simple substance include I₂, F₂, Cl₂, Br₂, and the like. Among these, I₂ and Br₂ are preferable from the viewpoint of reducing the corrosion due to remaining halogen in the binder (A).

In one embodiment, the binder for a battery (A) may have higher ion conductivity by containing halogen as the salt described above.

In one embodiment, the binder for a battery (A) further contains one or more selected from the group consisting of orthophosphoric acid, pyrophosphoric acid, metaphosphoric acid, phosphorous acid, and salts thereof.

The content of the compound α in the binder for a battery (A) is not particularly limited, and, for example, from the viewpoint of the force that bonds an active material or a solid electrolyte as described later, the content is 50% by mass or more, 60% by mass or more, 70% by mass or more, 80% by mass or more, 85% by mass or more, 90% by mass or more, 95% by mass or more, 98% by mass or more, 99% by mass or more, 99.5% by mass or more, 99.8% by mass or more, or 99.9% by mass or more, based on the total mass of the binder for a battery (A) of 100% by mass.

The content of the halogen-containing substance (halogen simple substance and halogen compound; provided that a halogen compound fallen into the compound α is excluded from the halogen-containing substance.) in the binder for a battery (A) is not particularly limited, and for example, from the viewpoint of the conductivity of ions serving as carriers and the force that bonds an active material or a solid electrolyte, the content may be 50% by mass or less, 40% by mass or less, 30% by mass or less, 20% by mass or less, 15% by mass or less, 10% by mass or less, 8% by mass or less, 5% by mass or less, 3% by mass or less, 2% by mass or less, 1 % by mass or less, 0.5% by mass or less, 0.1 % by mass or less, 0.05% by mass or less, or 0.01 % by mass or less, based on the total mass of the binder for a battery (A) of 100% by mass.

The total content of orthophosphoric acid, pyrophosphoric acid, metaphosphoric acid, phosphorous acid, and salts thereof in the binder for a battery (A) is not particularly limited.

100% by mass of the battery binder (A) may be substantially occupied by the compound α, or may be substantially occupied by the compound α, and one or more kinds selected from the group consisting of a halogen-containing substance, orthophosphoric acid, pyrophosphoric acid, metaphosphoric acid, phosphorous acid, and salts thereof.

The binder for a battery (A) can be used for various batteries. Examples of the battery include a secondary battery such as a lithium-ion battery. In addition, the battery may be an all-solid-state battery. The "binder" is blended into any element, for example, one or more selected from the group consisting of a composite electrode layer for a battery and an electrolyte layer for a battery in such a battery, and can exhibit bonding properties (bonding force) for maintaining integrity of the element by bonding other components contained in the element (for example, layer) with each other.

A conventional composite electrode layer for a battery (for example, a positive electrode or a negative electrode as described later) is difficult to follow the expansion and contraction (volume change) of the electrode active material caused by charging and discharging or the like, and is likely to cause problems such as capacity deterioration. The electrolyte layer adjacent to the composite electrode layer for a battery may also be affected by such a volume change of the composite electrode layer for a battery, which may cause problems such as deterioration. On the other hand, by using the binder for a battery (A), a volume change of the composite electrode layer for a battery or the electrolyte layer for a battery can be absorbed due to the flexibility of the binder for a battery (A), thereby preventing capacity deterioration and the like. As a result, the battery can exhibit excellent cycle characteristics. Further, since the binder for a battery (A) itself may have ion conductivity, even if the amount of the binder for a battery (A) is increased in order to enhance the bonding property between the materials constituting the layer (for example, an electrode mixture), the decrease in the ion conductivity can be suppressed, and the battery characteristics can be favorably exhibited. Further, in one embodiment, the binder for a battery (A) is superior in heat resistance as compared with a conventional organic binder or a polymer solid electrolyte (for example, polyethylene oxide, and the like), so that the operating temperature range of the battery can be expanded.

### <Composite electrode layer for battery or electrolyte layer for battery>

The composite electrode layer for a battery or the electrolyte layer for a battery according to one aspect of the invention contains the above-described binder for a battery (A).

In one embodiment, the binder for a battery (A) is unevenly distributed or uniformly distributed (dispersed) in the composite electrode layer for a battery or the electrolyte layer for a battery. In one embodiment, by the binder for a battery (A) being uniformly distributed (dispersed) in the layer, the layer integrity is maintained better.

The composite electrode layer for a battery or the electrolyte layer for a battery preferably further contains a solid electrolyte (hereinafter, referred to as a solid electrolyte (B)). Note that the "solid electrolyte (B)" does not contain the binder (A) for a battery. The solid electrolyte (B) is not particularly limited, and for example, an oxide solid electrolyte and a sulfide solid electrolyte can be used. Among these, a sulfide solid electrolyte is preferable, and specific examples thereof include sulfide solid electrolytes having crystal structures such as an argyrodite-type crystal structure, a Li₃PS₄ crystal structure, a Li₄P₂S₆ crystal structure, a Li₇P₃S₁₁ crystal structure, a Li₄₋ₓGe₁₋ₓPₓS₄-based thio-LISICON Region II-type crystal structure, and a crystal structure similar to that of Li₄₋ₓGe₁₋ₓPₓS₄-based thio-LISICON Region II-type (hereinafter, sometimes abbreviated as Rll-type crystal structure).

In addition, the solid electrolyte (B) may or may not contain a compound in which all of the group R's in the compound α are replaced with -SM (where M is a metal element, and as the explanation therefor that about the compound α is incorporated.) (also referred to as compound α'). Further, the solid electrolyte (B) may or may not contain an organic binder.

Examples of the composite electrode layer for a battery include a positive electrode, a negative electrode, and the like.

When the composite electrode layer for a battery is a positive electrode, the positive electrode may further contain a positive electrode active material. The positive electrode active material is a material capable of intercalating and desorbing lithium ions, and materials known as a positive electrode active material in the field of batteries can be used.

Examples of the positive electrode active material include metal oxides, sulfides, and the like. Sulfides include metal sulfides and non-metal sulfides.

The metal oxide is, for example, a transition metal oxide. Specifically, examples thereof include V₂O₅, V₆O₁₃, LiCoO₂, LiNiO₂ LiMnO₂, LiMn₂O₄, Li(NiₐCo_{b}Mn_{c})O₂ (where 0<a<1, 0<b<1, 0<c<1, a+b+c=1), LiNi_{1-Y}Co_{Y}O₂, LiCo_{1-Y}Mn_{Y}O₂, LiNi_{1-Y}Mn_{Y}O₂ (where 0≦Y<1), Li(NiₐCo_{b}Mn_{c})O₄ (0<a<2, 0<b<2, 0<c<2, a+b+c=2), LiMn_{2-Z}Ni_{Z}O₄, LiMn_{2-Z}Co_{Z}O₄ (where 0<Z<2), LiCoPO₄, LiFePO₄, CuO, Li(NiₐCo_{b}Al_{c})O₂ (where 0<a<1, 0<b<1, 0<c<1, a+b+c=1), and the like.

Examples of the metal sulfide include titanium sulfide (TiS₂), molybdenum sulfide (MoS₂), iron sulfide (FeS, FeS₂), copper sulfide (CuS), nickel sulfide (Ni₃S₂), and the like.

Examples of the metal oxide other than those mentioned above include bismuth oxide (Bi₂O₃), bismuth leadate (Bi₂Pb₂O₅), and the like.

Examples of the non-metal sulfide include an organic disulfide compound, a carbon sulfide compound, and the like.

In addition to those mentioned above, niobium selenide (NbSe₃), metal indium, and sulfur can also be used as the positive electrode active material.

When the composite electrode layer for a battery is a negative electrode, the negative electrode may further contain a negative electrode active material.

As the negative electrode active material, materials commonly used in a lithium-ion secondary battery can be used, and examples thereof include carbon materials such as graphite, natural graphite, artificial graphite, hard carbon, and soft carbon; composite metal oxides such as a polyacene-based conductive polymer and lithium titanate; and compounds capable of forming an alloy with lithium such as silicon, a silicon alloy, a silicon composite oxide, tin, and a tin alloy. Among these, the negative electrode active material preferably contains one or more selected from the group consisting of Si (silicon, a silicon alloy, a silicon-graphite complex, a silicon complex oxide, and the like) and Sn (tin, and a tin alloy).

One or both of the positive electrode and the negative electrode may contain a conductive aid. When the electron conductivity of the active material is low, it is preferable to add a conductive aid. By the addition thereof, the rate characteristics of a battery can be increased.

Specific examples of the conductive aid include materials containing at least one element selected from the group consisting of carbon material, nickel, copper, aluminum, indium, silver, cobalt, magnesium, lithium, chromium, gold, ruthenium, platinum, beryllium, iridium, molybdenum, niobium, osmium, rhodium, tungsten, and zinc. More preferably, they include carbon simple substances and carbon materials other than the carbon simple substance, which have high conductivity; and metal simple substances including nickel, copper, silver, cobalt, magnesium, lithium, ruthenium, gold, platinum, niobium, osmium, and rhodium, mixtures the metal simple substances, and compounds containing these metals.

Specific examples of the carbon material include carbon black such as Ketjenblack black, acetylene black, Denka black, thermal black, and channel black, graphite, carbon fibers, and activated carbon. The carbon material may be used alone or in combination of two or more. Among these, Denka black having high electron conductivity, acetylene black, and Ketjenblack black are preferable.

The electrolyte layer contains the binder for a battery (A), and may contain a solid electrolyte (B) other than the binder for a battery (A) as an arbitrary component.

The composition of the positive electrode is not particularly limited, and it may have a mass ratio of positive electrode active material: solid electrolyte (B): binder for a battery (A): conductive aid being 50 to 99:0 to 30:1 to 30:0 to 30, for example.

Of the positive electrode, 30% by mass or more, 50% by mass or more, 80% by mass or more, 90% by mass or more, 95% by mass or more, 98% by mass or more, or 99% by mass or more may be occupied by a positive electrode active material, the solid electrolyte (B), the binder for a battery (A), and a conductive aid.

The composition of the negative electrode is not particularly limited, and it may have a mass ratio of negative electrode active material: solid electrolyte (B): binder for a battery (A): conductive aid being 40 to 99:0 to 30:1 to 30:0 to 30, for example.

Of the negative electrode, 30% by mass or more, 50% by mass or more, 80% by mass or more, 90% by mass or more, 95% by mass or more, 98% by mass or more, or 99% by mass or more may be occupied by a negative electrode active material, the solid electrolyte (B), the binder for a battery (A), and a conductive aid.

The composition of the electrolyte layer is not particularly limited, and may have a mass ratio of solid electrolyte (B): binder for a battery (A) being 99.9:0.1 to 0:100, for example.

When the mass ratio of a solid electrolyte (B) is 0, the binder for a battery (A) can also serve as a solid electrolyte.

Of the electrolyte layer, 30% by mass or more, 50% by mass or more, 80% by mass or more, 90% by mass or more, 95% by mass or more, 98% by mass or more, 99% by mass or more, or 99.9% by mass or more may be occupied by the solid electrolyte (B) and the binder for a battery (A).

The method of forming a layer containing the compound α, for example, the method of forming each layer constituting the above-described battery is not particularly limited, and examples thereof include a coating method. In the coating method, a coating liquid in which components contained in each layer are dissolved or dispersed in a solvent can be used. As the solvent contained in the coating liquid, chain, cyclic, or aromatic ethers (for example, dimethyl ether, dibutyl ether, tetrahydrofuran, anisole, etc.), esters (for example, ethyl acetate, ethyl propionate, etc.), alcohols (for example, methanol, ethanol, etc.), amines (for example, tributylamine, etc.), amides (for example, N-methylformamide, etc.), lactams (for example, N-methyl-2-pyrrolidone, etc.), hydrazine, acetonitrile, and the like can be used. The coating liquid is applied and the solvent is evaporated therefrom to form a layer (dried coating film). From the viewpoint of easiness of evaporating the solvent, anisole is preferable. The evaporation method is not particularly limited, and for example, one or more means selected from the group consisting of heat drying, blow drying, and decompression drying (including vacuum drying) can be used.

Since the compound α according to this aspect is excellent in solubility, dispersibility and stretchability are increased, the above-described coating method can be preferably applied, various solvents can be used with high versatility., and the binding property of the formed layer can be increased.

A member to be coated with the coating liquid is not particularly limited. The formed layer may be used in a battery together with the member, or the formed layer peeled off from the member may be used in a battery. In one embodiment, the coating liquid for forming a positive electrode is applied on a positive electrode current collector. In one embodiment, the coating liquid for forming a negative electrode is applied on a negative electrode current collector. In one embodiment, the coating liquid for forming an electrolyte layer is applied on a positive electrode or a negative electrode. In one embodiment, the coating liquid for forming an electrolyte layer is applied on a member that can be easily peeled off, and then the formed layer is peeled off from the member, and is disposed between a positive electrode and a negative electrode.

It is preferable to press the dried coating film (layer). The pressing may be any means that presses the layer to compress it. For example, a press can be applied to reduce the porosity of the layer. The pressing device is not particularly limited, and for example, a roll press, a uniaxial press, or the like can be used. The temperature at the time of pressing is not particularly limited, and may be about room temperature (23°C) or may be lower or higher than room temperature. By applying the pressing, the binder for a battery (A) contained in the layer is suitably deformed due to its flexibility, and formation of the interface between the electrode mixtures contained in the layer is promoted. The pressing makes the battery characteristics to be more increased.

The pressing may be performed for a layer-by-layer, or may be performed so as to press a stack of a plurality of layers (for example, a "battery sheet" to be described later) in the stacking direction of the layers.

### <Battery sheet>

The battery sheet according to one aspect of the invention has at least one layer selected from the group consisting of the composite electrode layer and the electrolyte layer described above. The battery sheet contains the compound α or the binder for a battery (A), so that the battery sheet exhibits excellent flexibility, and is prevented from breakage and peeling from the current collector.

### <Battery>

A battery according to one aspect of the invention contains the compound α described above.

In one embodiment, the battery is an all-solid-state battery.

In one embodiment, the all-solid-state battery includes a stacked body having a positive electrode current collector, a positive electrode, an electrolyte layer, a negative electrode, and a negative electrode current collector in this order. As the current collector, a plate-like body, a foil-like body, and the like, formed of copper, magnesium, stainless steel, titanium, iron, cobalt, nickel, zinc, aluminum, germanium, indium, lithium, an alloy thereof, or the like can be used.

In the battery, it is preferred that the compound α be contained in one or more selected from the group consisting of a positive electrode, an electrolyte layer, and a negative electrode.

In the above description (and Examples described later), the case where the compound α is used for a battery is mainly described, but the use of the compound α is not limited to the battery. The compound α can be widely used to various applications due to its excellent flexibility, ion conductivity, and the like.

### <Method for producing compound α>

A method for producing a compound α according to one aspect of the invention includes: adding an oxidizing agent to a raw material compound containing P, S, and O as constituent elements, and reacting the raw material compound with the oxidizing agent.

The reaction of the raw material compound with the oxidizing agent gives the compound α described above as a product

In one embodiment, the compound α is obtained by adding an oxidizing agent to a raw material compound containing P and S, and one or more elements selected from the group consisting of O, N, and halogen as constituent elements, and then reacting the raw material compound with the oxidizing agent.

The raw material compound as a raw material (hereinafter referred to as "raw material compound (C)") contains P and S, and one or more elements selected from the group consisting of O, N, and halogen as constituent elements.

The raw material compound (C) preferably contains one or more elements selected from the group consisting of Li, Na, Mg, and Al as constituent elements.

The raw material compound (C) preferably contains a PSₓO_{y} structure (where 1 ≤ x and 0 < y).

In one embodiment, the PSₓO_{y} structure is one or more selected from the group consisting of a PS₃O structure, a PS₂O₂ structure, and a PSO₃ structure, and a P₂S₆O structure (PS₃O_{1/2} structure), a P₂S₅O₂ structure (PS_{5/2}O), P₂S₄O₃ structure (PS₂O_{3/2} structure), a P₂S₃O₄ structure (PS_{3/2}O₂ structure), and a P₂S₂O₇ structure (PSO_{7/2} structure) may also be present as structures similar to the structures above.

In one embodiment, the PSₓO_{y} structure is a PS₃O structure.

Examples of the raw material compound (C) having a PS₃O structure include Li₃PS₃O, NasPSsO, Mg_{3/2}PS₃O, and the like.

Li₃PS₃O can be produced, for example, by reacting Li₂O, Li₂S, and P₂S₅ in the presence of a dispersion medium by a mechanochemical process (mechanical milling).

In one embodiment, the compound α can be prepared by reacting Li₂O, Li₂S, and P₂S₅, and an oxidizing agent in the presence of a dispersion medium (for example, n-heptane or the like) by a mechanochemical process (mechanical milling).

The raw material compound (C) may be used in one kind alone, or in combination of two or more.

In addition to the raw material compound (C), a raw material compound containing P and S as constituent elements and not containing O (also referred to as "raw material compound (C')") may be used in combination. In this case, an oxidizing agent may be added to the mixture of the raw material compound (C) and the raw material compound (C') to react the raw material compound (C) and the raw material compound (C') in the mixture with the oxidizing agent.

The raw material compound (C') preferably contains one or more elements selected from the group consisting of Li, Na, Mg, and Al as constituent elements.

In one embodiment, the raw material compound (C') has a PS₄ structure.

Examples of the raw material compound (C') having a PS₄ structure include Li₃PS₄, Li₄P₂S₇, Na₃PS₄, Na₄P₂S₇, and the like. The raw material compound (C) may have two or more PS₄ structures, such as Li₄P₂S₇, Na₄P₂S₇, and the like. Here, when the raw material compound (C') has two PS₄ structures adjacent to each other, the two PS₄ structures may share one S.

Li₃PS₄ can be produced, for example, by reacting Li₂S with P₂S₅ in the presence of a dispersion medium by a mechanochemical process (mechanical milling). Examples of the dispersion medium include n-heptane and the like.

The raw material compound (C') may be used in one kind alone, or in combination of two or more.

In one embodiment, the compound α can be produced by reacting the raw material compound (C), the raw material compound (C'), and an oxidizing agent in the presence of a dispersion medium by a mechanochemical method (mechanical milling). Here, a part or all of the raw material compound (C) may be replaced with raw materials of the raw material compound (C) (for example, Li₂O, Li₂S and P₂S₅). In addition, a part or all of the raw material compound (C') may be replaced with raw materials of the raw material compound (C') (for example, Li₂S and P₂S₅).

In the above explanation, for example, Na₂S or the like may be used in place of Li₂S. In addition, for example, Na₂O or the like may be used in place of Li₂O. For the mechanochemical method, a planetary ball mill or the like can be used, for example. Examples of the dispersion medium include n-heptane and the like.

Examples of the oxidizing agent include halogen simple substance, oxygen, ozone, oxides (Fe₂O₃, MnO₂, Cu₂O, Ag₂O, etc.), oxoadd salts (chlorate, hypochlorite, iodate, bromate, chromate, permanganate, vanadate, bismuthate, etc.), peroxides (lithium peroxide, sodium peroxide, etc.), halide salts (Agl, Cul, Pb)₂, AgBr, CuCI, etc.), cyanide salts (AgCN, etc.), thiocyanate salts (AgSCN, etc.), and sulfoxides (dimethylsulfoxide, etc.). In one embodiment, the oxidizing agent is preferably a halogen simple substance from the viewpoint of enhancing the ion conductivity by the metal halide generated as a by-product. The "metal halide" may be a salt of a halogen with one or more elements selected from the group consisting of Li, Na, Mg, and Al, which are derived from the raw material compound (C) (for example, lithium halide in the case where the raw material compound (C) contains Li) or the like.

Examples of the halogen simple substance include I₂, F₂, Cl₂, Br₂, and the like. The halogen simple substance is preferably I₂, and Br₂ from the viewpoint of obtaining higher ion conductivity.

The oxidizing agent may be used in one kind alone, or in combination of two or more.

The inventors have found that the above-described compound α' can be obtained by reacting the raw material compound (C) (for example, Li₃PS₄) with an oxidizing agent (for example, I₂). This reaction can be represented by the following Reaction Scheme (8).

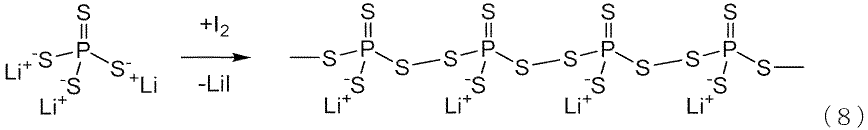

In accordance with the reaction represented by the Reaction Scheme (8), a cross-linking of the disulfide bond of P-S-S-P is formed. In particular, by extending this crosslink (a P-S-S chain formed by repeating P-S-S repeating units), good properties as binders appear. By blending the compound α' thus obtained into a solid electrolyte, a self-supporting solid electrolyte sheet can be produced. When the positive and negative electrode materials are provided for this solid electrolyte sheet, operation as a battery has been confirmed.

In general, a binder for a battery is used by dissolving and dispersing in a solvent to form a dispersion liquid, and then mixing a slurry containing an active material, a solid electrolyte, and a conductive aid with the dispersion liquid. Therefore, the solubility is one of important physical properties for a compound used as a binder for a battery. Since the above-mentioned compound α' has three single bonds of sulfur (S) crosslinkable in a PS₄ structure, when the compound α' is multimerized (the chain composed of P-S-S extends), the disulfide bonds are branched to form a three-dimensional network, although that is not shown in the Reaction Scheme (8). The three-dimensional network can lead to reduced solubility in a solvent.

Therefore, the inventors have further intensively studied to find that by using the raw material compound (C) in place of a part or all of the raw material compound (C'), the branching of the disulfide bond (formation of a three-dimensional network) by extending the chain composed of P-S-S is suppressed, and the compound α can be produced as a more linear, preferably straight-chain multimer. Such a reaction can be represented by, for example, the following Reaction Scheme (9).

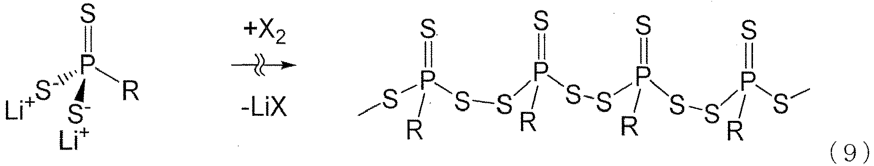

In the Scheme, R is a group containing one or more elements selected from the group consisting of O, N, and halogen (which may correspond to the group R described above); and X is halogen.

In the Reaction Scheme (9), the raw material compound (C) is shown as replacing a part of sulfur (S) of a PS₄ structure in a raw material compound (C') with the different group R.

For example, when the raw material compound (C) (for example, Li₃PS₃O) is reacted with an oxidizing agent (for example, I₂), the group R is -0Li.

In one embodiment, the compound α has a disulfide bond formed in accordance with the Reaction Scheme (9).

In one embodiment, X in the Reaction Scheme (9) is iodine (I), fluorine (F), chlorine (CI), or bromine (Br).

In one embodiment, X in the Reaction Scheme (9) is iodine (I).

In one embodiment, when the raw material compound (C) is Li₃PS₃O and the oxidizing agent is a halogen simple substance (X₂), the reactions as shown in Reaction Schemes (10) to (12) below proceed with. In one embodiment, a compound α has a P-S-S chain (a chain formed by repetition of repeating units of P-S-S) (Reaction Schemes (10) and (11)). In one embodiment, the formation of branch (branching) associated with the extension of the P-S-S chain of the compound α is prevented (Reaction Scheme (12)). In one embodiment, two phosphorus elements and a disulfide bond which bonds the two phosphorus elements constitutes theP-S-S chain.

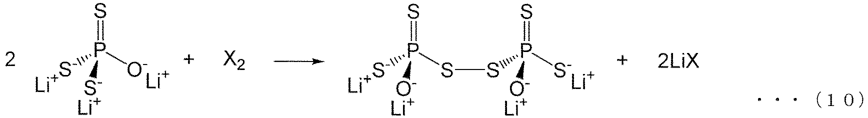

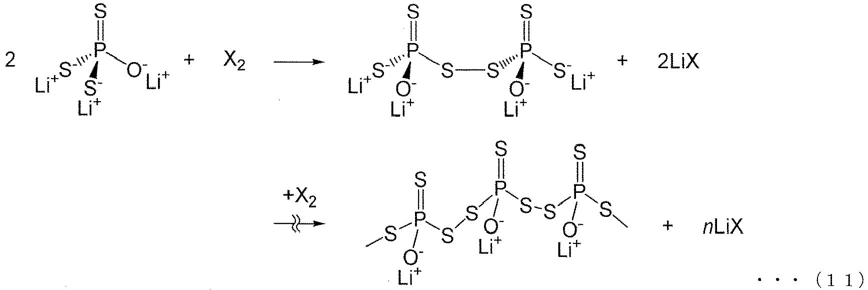

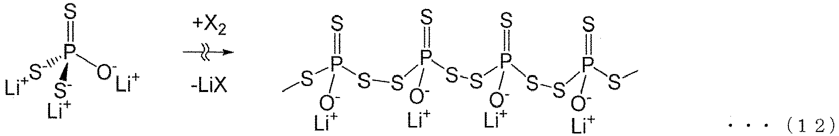

In the Schemes, X is halogen, and n is an integer.

In one embodiment, the compound α has a disulfide bond formed in accordance with any of Reaction Schemes (10) to (12).

In one embodiment, X in Reaction Schemes (10) to (12) is iodine (I), fluorine (F), chlorine (CI) or bromine (Br).

In one embodiment, X in Reaction Schemes (10) to (12) is iodine (I).

The molar ratio of Li₃PS₃O to I₂ (Li₃PS₃O: I₂) provided (blended) for the reaction is not particularly limited and may be, for example, 10:1 to 1:10, 5:1 to 1:5, 3:1 to 1:3, 2:1 to 1:2,4:3 to 3:4, 5:4 to 4:5, or 8:7 to 7:8. The more the proportion of I₂, the longer the P-S-S chain can be extended.

The above molar ratio relationship is not limited to the case of reacting Li₃PS₃O and I₂, and can also be applied to the case of reacting, for example, the raw material compound (C) having a PSₓO_{y} structure such as a PS₃O structure (where 0 ≤ x and 0 < y) with a halogen simple substance.

When the raw material compound (C) and the raw material compound (C) are used in combination, the above molar ratio relationship can be applied by replacing with the molar ratio of the total of the raw material compound (C) and the raw material compound (C'), and a halogen simple substance.

Further, when the raw materials of the raw material compound (C) (for example, Li₂O, Li₂S and P₂S₅) are used, the molar ratio relationship described above can be applied based on the amounts of the raw material compound (C) produced when these raw materials are completely reacted. Similarly, when the raw materials of the raw material compound (C') (for example, Li₂S and P₂S₅) are used, the molar ratio relationship described above can be applied based on the amounts of the raw material compound (C') produced when these raw materials are completely reacted.

In the step of reacting a raw material compound (C) and an oxidizing agent (reaction step), the raw material compound (C) and the oxidizing agent are preferably reacted by using one or more energies selected from the group consisting of physical energy, thermal energy, and chemical energy.

In the reaction step, the raw material compound (C) and the oxidizing agent are preferably reacted by using an energy including physical energy. Physical energy can be supplied, for example, by using a mechanochemical process (mechanical milling). For the mechanochemical method, a planetary ball mill or the like can be used, for example.

In the mechanochemical process using a planetary ball mill and the like, the process conditions are not particularly limited, and for example, the revolutions may be 100 rpm to 700 rpm, the processing time may be 1 hour to 100 hours, and the ball size may be 1 mm to 10 mm in diameter.

In the reaction step, a raw material compound (C) and an oxidizing agent are preferably reacted in a liquid. In this case, the raw material compound (C) and the oxidizing agent can be reacted in the presence of a dispersion medium. It is preferable to react a raw material compound (C) and an oxidizing agent in the presence of a dispersion medium by a mechanochemical method (mechanical milling) from the viewpoint of increasing the reactivity due to such mechanical energy.

Examples of the dispersion medium include an aprotic liquid and the like. The aprotic liquid is not particularly limited and examples thereof include, for example, chain or cyclic alkanes, preferably including 5 or more carbon atoms, such as n-heptane; aromatic hydrocarbons such as benzene, toluene, xylene, anisole, and the like; chain or cyclic ethers such as dimethyl ether, dibutyl ether, tetrahydrofuran, and the like; alkyl halides such as chloroform, methylene chloride, and the like; esters such as ethyl propionate, and the like.

In one embodiment, when a raw material compound (C) and an oxidizing agent are reacted in a liquid, the reaction can be conducted in the state of one or both of the raw material compound (C) and the oxidizing agent being mixed with a solvent

As the solvent, among the above-mentioned dispersing media, those capable of dissolving one or both of the raw material compound (C) and the oxidizing agent can be used, and for example, anisole, dibutyl ether, and the like are preferable.

Even in such a solution, the raw material compound (C) and the oxidizing agent can be reacted by the use of one or more energies selected from the group consisting of physical energy such as stirring, milling, ultrasonic vibration, and the like, thermal energy, and chemical energy. For example, when thermal energy is used, the solution can be heated. The heating temperature is not particularly limited and may be, for example, 40 to 200°C, 50 to 120°C, or 60 to 100°C

In the reaction step, a compound α can be produced by oxidizing the raw material compound (C) with an oxidizing agent.

The above description applies not only to the case where the raw material compound (C) is used alone, but also to the case where the raw material compound (C) and the raw material compound (C') are used in combination.

When a compound α is produced by the reaction in the liquid, the liquid (dispersion medium or solvent) can be removed as necessary. By removing the liquid, the compound α can be obtained in the stated of solid (powder). The method of removing the liquid is not particularly limited, and examples thereof include drying, solid-liquid separation, and the like, and two or more of these may be combined.

When solid-liquid separation is used, the compound α may be reprecipitated. At this time, a liquid containing the compound α can be added to a poor solvent (a poor solvent for the compound α) or a non-solvent (a solvent not dissolving the compound α), to recover the compound α as a solid (solid phase). For example, a method may be given in that n-heptane is added as a poor solvent to an anisole solution containing the compound α, followed by solid-liquid separation. Method for conducting solid-liquid separation is not particularly limited, and examples thereof include an evaporation method, a filtration method, a centrifugal separation method, and the like. When solid-liquid separation is used, an effect of increasing purity can be obtained.

In one embodiment, LiI is produced as a by-product along with the production of compound α. This LiI may or may not be separated from the compound α. As described above, by leaving LiI in the mixture with the compound α, the compound α can have higher ion conductivity.

Here, the crystalline phase of LiI may be, for example, o-Lil (cubic) (ICSD 414244), h-Lil (hexagonal) (ICSD 414242), or the like. In general, when a compound α is produced by a mechanochemical method (mechanical milling), the crystalline phase of LiI becomes c-Lil (cubic), and when a compound α is produced by a method of reacting in a liquid (preferably in a solution), the crystalline phase of LiI becomes h-Lil (hexagonal).

It is possible to determine which crystalline phase LiI is by powder X-ray diffraction or solid-state ⁷Li-NMR measurement In the solid-state ⁷Li-NMR measurement, when a peak derived from LiI (chemical shift-4.57 ppm) is observed, the crystalline phase of LiI is determined as c-Lil, and when no peak derived from LiI is observed, that of LiI is determined as h-Lil.

### Examples

Examples of the invention will be described below, but the invention is not limited thereto.

### 1. Production of compound

### (Production Example 1)

Li₂O (manufactured by Kojundo Chemical Laboratory Co., Ltd., 2Nup powder), Li₂S (manufactured by Furuuchi Chemical Corporation, 3N powder 200Mesh), and P₂S₅ (manufactured by Merck KGaA) were mixed at a molar ratio of Li₂O: Li₂S: P₂S₅ = 50: 25: 25, and reacted under the following condition by mechanical milling. The dispersion medium was then removed by drying to obtain Li₃PS₃O (glassy powder).

### [Mechanical milling condition]

Planetary ball mill: Premium line PL-7, manufactured by Fritsch GmbH
Sample mass: 3.6 g
Mode: Wet milling (dispersion medium: n-heptane 11.7mL)
Ball: made of ZrO₂, 5 mm in diameter, total mass of 106 g
Pot: made of ZrO₂, 80 mL in capacity
Rate of rotation: 500 rpm
Processing time: 20 hours

### (Production Example 2)

Li₂S (3N powder 200Mesh, manufactured by Furuuchi Chemical Corporation) and P₂S₅ (manufactured by Merck KGaA) were mixed at a molar ratio of Li₂S: P₂S₅ = 3: 1, and reacted by the same mechanical milling as in Production Example 1. The dispersion medium was then removed by drying to obtain Li₃PS₄ (glassy powder).

### (Production Example 3)

Li₂O (manufactured by Kojundo Chemical Laboratory Co., Ltd., 2Nup powder), Li₂S (manufactured by Furuuchi Chemical Corporation, 3N powder 200Mesh), and P₂S₅ (manufactured by Merck KGaA) were mixed at a molar ratio of Li₂O: Li₂S: P₂S₅ = 25: 50: 25, and reacted by the same mechanical milling as in Production Example 1. The dispersion medium was then removed by drying to obtain Li₃PS_{7/2}O_{1,2} (glassy powder).

### (Example 1)

To Li₃PS₃O obtained in Production Example 1, I₂ (manufactured by Kojundo Chemical Laboratory Co., Ltd., 5N irregular grains; use after pulverizing in a mortar) was added at a molar ratio of Li₃PS₃O: I₂ = 2: 1, and the mixture was subjected to reaction by mechanical milling under the following condition (polysulfidation). The dispersion medium was then removed by drying to obtain a compound (powder, sometimes referred to as "Li₃PS₃O-I₂ (2:1)" based on the blending of the raw materials).

### [Mechanical milling condition]

Planetary ball mill: Premium line PL-7, manufactured by Fritsch GmbH
Sample mass: 1 g
Mode: Wet milling (n-heptane: 3 mL)
Ball: made of ZrO₂, 5 mm in diameter, total mass of 53 g
Pot: made of ZrO₂, 45 mL in capacity
Rate of rotation: 500 rpm
Processing time: 20 hours

### (Example 2)

A reaction was carried out in the same manner as in Example 1 except that the molar ratio was changed to Li₃PS₃O: I₂ = 4: 3 to obtain a compound (sometimes referred to as "Li₃PS₃O-I₂ (4:3)" based on the blending of the raw materials).

### (Example 3)

A reaction was carried out in the same manner as in Example 1 except that the molar ratio was changed to Li₃PS₃O: I₂ = 1: 1 to obtain a compound (sometimes referred to as "Li₃PS₃O-I₂ (1:1)" based on the blending of the raw materials).

### (Example 4)

A reaction was carried out in the same manner as in Example 1 except that the molar ratio was changed to Li₃PS₃O: I₂ = 4: 5 to obtain a compound (sometimes referred to as "Li₃PS₃O-I₂ (4:5)" based on the blending of the raw materials).

### (Example 5)

Li₃PS₃O obtained in Production Example 1 and I₂ were added to anisole at a molar ratio of Li₃PS₃O: I₂ = 1:1 and the mixture was subjected to reaction with stirring at 60°C for 3 days (polysulfidation; liquid-phase synthesis). Anisole was then removed by drying to obtain a compound (sometimes referred to as "Li₃PS₃O-I₂ (1:1) Liq" based on the blending of the raw materials and the synthetic method (liquid-phase; Liq)).

### (Example 6)

To Li₃PS_{7/2}O_{1/2} obtained in Production Example 3, I₂ (manufactured by Kojundo Chemical Laboratory Co., Ltd., 5N irregular grains; use after pulverizing in a mortar) was added at a molar ratio of Li₃PS_{7/2}O_{1/2}:I₂ = 1: 1, and the mixture was subjected to reaction by mechanical milling same as in Example 1 (polysulfidation). The dispersion medium was then removed by drying to obtain a compound (powder, sometimes referred to as "Li₃PS_{7/2}O_{1/2}-I₂ (1:1)" based on the blending of the raw materials).

### (Example 7)

Li₃PS₄ obtained in Production Example 2 and Li₃PS₃O obtained in Production Example 1 were mixed at a molar ratio of Li₃PS₄: Li₃PS₃O = 50: 50 to obtain a mixture. I₂ was added to the mixture at a molar ratio of Li₃PS₄+Li₃PS₃O: I₂ = 1: 1 and the mixture was subjected to reaction by mechanical milling same as in Example 1 (polysulfide). The dispersion medium was then removed by drying to obtain a compound (sometimes referred to as "Li₃PS₄-Li₃PS₃O (50/50)-I₂ (1:1)" based on the blending of the raw materials).

### (Comparative Examples 1 to 3)

Each compound was obtained in the same manner as in each of Examples 1 to 3 except that Li₃PS₄ obtained in Production Example 2 was used instead of Li₃PS₃O obtained in Production Example 1. Based on the blending of the raw materials, the compound obtained in Comparative Example 1 is sometimes referred to as Li₃PS₄-I₂ (2:1), the compound obtained in Comparative Example 2 as Li₃PS₄-I₂ (4:3), and the compound obtained in Comparative Example 3 as Li₃PS₄-I₂ (1:1).

### Evaluation

### (1) Raman spectroscopy

The compound obtained in Production Example 1 (Li₃PS₃O), the compound obtained in Production Example 3 (Li₃PS_{7/2}O_{1/2}), and the compounds obtained in Examples 1 to 4, 6, and 7 were subjected to the following toluene treatment, and then subjected to microscopic Raman spectroscopy using a laser Raman spectrophotometer (LabRAM HR Evolution LabSpec 6, manufactured by HORIBA, Ltd.).

### [Procedure of toluene treatment]

a. One g of a compound is placed in vial, and 10 mL of toluene (manufactured by FUJIFILM Wako Pure Chemical Corporation, ultra-dehydrated) is added thereto, and the mixture is stirred and allowed to stand.
b. After removing the supernatant, 10 mL of toluene is added to the solid content (precipitate) again, and the mixture is stirred and allowed to stand.
c. Step b mentioned above is repeated once more.
d. After removing the supernatant, the solid content (precipitate) is dried in vacuo at 60°C for 10 hours to obtain a toluene-treated compound.

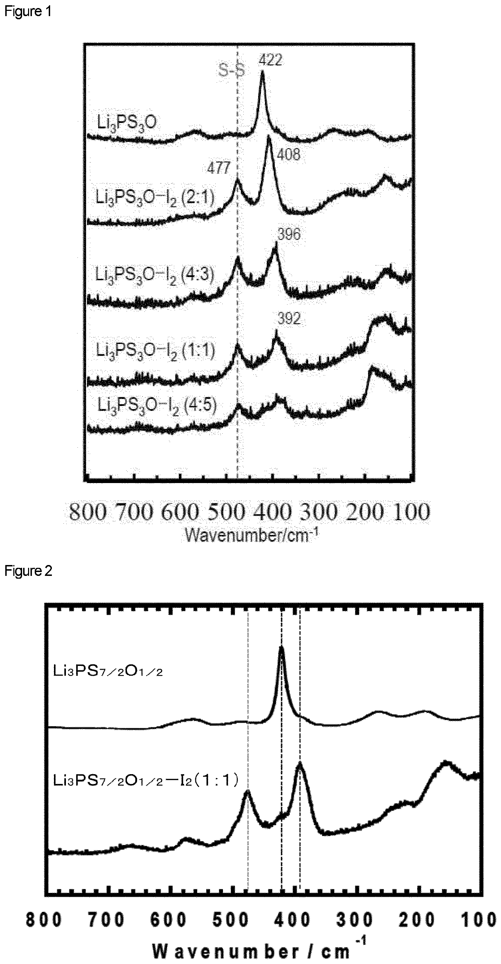

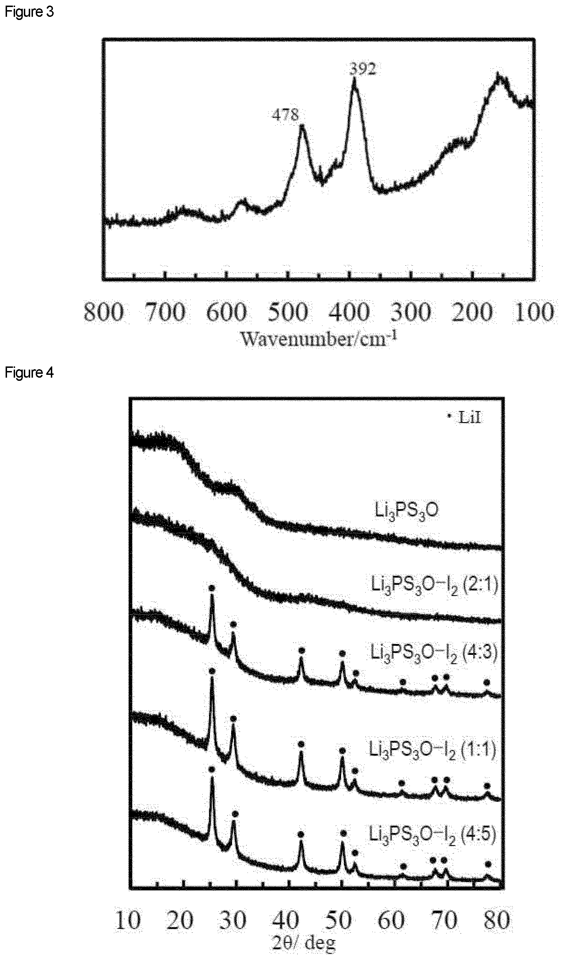

The Raman spectra obtained by microscopic Raman spectroscopy are shown in Figure 1 (compounds of Production Example 1 and Examples 1 to 4), Figure 2 (compounds of Production Example 3 and Example 6), and Figure 3 (a compound of Example 7).

From Figures 1 to 3, for the compounds of Examples 1 to 4, 6, and 7, a peak near the Raman shift 477 cm⁻¹ (peak A described above) derived from the disulfide (S-S) bond of P-S-S chains was confirmed.

As can be seen in particular from Figure 1, as the blending amount of I₂ of the raw material increases, the peak derived from the P-S bond (peak B described above) shifts to the lower wave number side (it is shifted from the Raman shift of 422 cm⁻¹ to 392 cm⁻¹). From this fact, it is estimated that P-S bond was extended by forming P-S-S chains in the compound.

### (2) Powder X-ray diffraction analysis (XRD)

As to the compound (Li₃PS₃O) obtained in Production Example 1 and the compounds obtained in Examples 1 to 4, XRD analysis was performed. The results are shown in Figure 4. In Figure 4, dots were added above the peaks derived from Lil.

Figure 4 shows that the compound of Example 1 (Li₃PS₃O-I₂ (2:1)) is amorphous containing the compound as well as LiI which is a by-product of the reaction (polysulfidation). On the other hand, the compound of Examples 2 to 4 (Li₃PS₃O-I₂ (4:3), (1:1), and (4:5)) in which I₂ to be blended as a raw material was increased more than from that of Example 1, precipitation of c-Lil (cubic) was confirmed.

### (3) ³¹P-NMR measurement

As to the compound obtained in Production Example 1 (Li₃PS₃O) and the compounds obtained in Examples 1 to 5, solid-state ³¹P-NMR using the following apparatus and under the following condition was performed.
Apparatus: ECZ 400 R apparatus (manufactured by JEOL Ltd.)
Observation nuclei: ³¹P
Observation frequency: 161.944 MHz
Measurement temperature: Room temperature
Pulse sequence: Single pulse (using 90° pulse)
90° pulse width: 3.2 µs
Waiting time after FID measurement until the next pulse application: 300 s
Rotation number of magic angle rotation: 11 kHz
Number of integrations: 64 times
Measurement range: 250 ppm to -150 ppm

In the measurement of the solid-state ³¹P-NMR spectrum, (NH₄)₂HPO₄ (chemical shift: 1.0 ppm) was used as an external reference of the chemical shift.

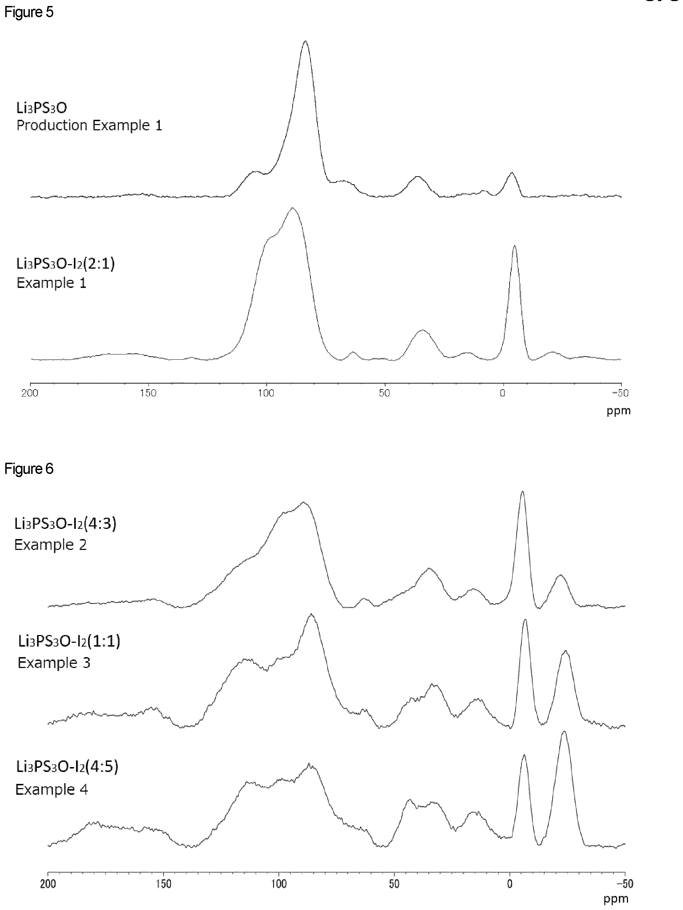

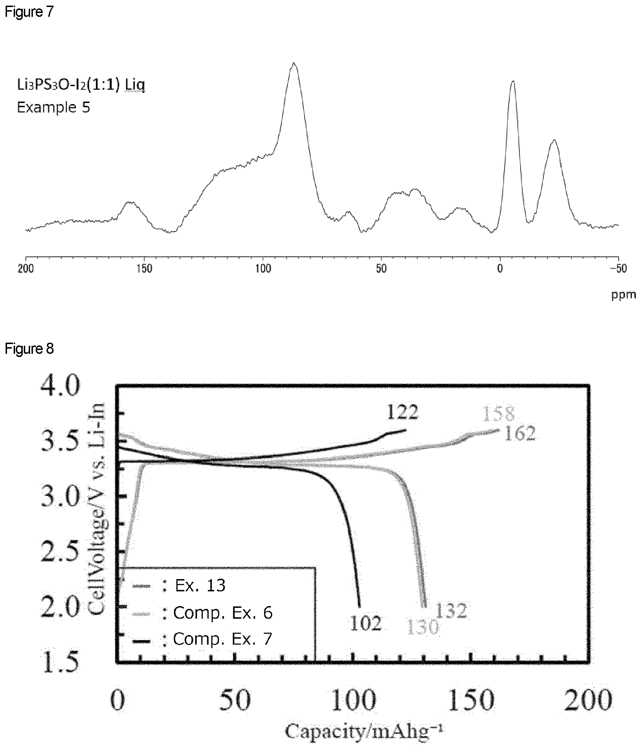

The solid-state ³¹P-NMR spectra obtained by solid-state ³¹P-NMR measurement are shown in Figure 5 (compounds of Production Example 1 and Example 1), Figure 6 (compounds of Examples 2 to 4), and Figure 7 (a compound of Example 5).

### (4) Solubility

### <Static test>

The compound obtained in Example 3 (Li₃PS₃O-I₂ (1:1)) was added to anisole to prepare an anisole solution containing 20% by mass of the compound. The anisole solution was left to stand at room temperature (20°C) for 1 hour, and the presence or absence of precipitates was visually observed. As a result, no precipitate was observed.

The same static test was also performed on a 30% by mass anisole solution of the compound (Li₃PS₄-Li₃PS₃O (50/50)-I₂ (1:1)) obtained in Example 7, and no precipitate was observed.

Further, for each of the compounds obtained in Example 3, Examples 6 to 7, and Comparative Example 3, the compounds were added to anisole, respectively, to prepare an anisole solution containing 30% by mass of the compound. The anisole solution was heated at 60°C for 30 minutes, left to cool (standing time: 1 hour), and then the state of the anisole solution was evaluated. As a result, for the compounds of Example 6 and Comparative Example 3, a slight turbidity was generated and an insoluble portion was present, and the compounds of Examples 3 and 7 were uniformly dissolved without turbidity. In addition, for the compound of Example 7, a highly flowable solution is obtained, and it is also possible to further increase the solution concentration.

### <Centrifugation test>

The compound obtained in Example 7 (Li₃PS₄-Li₃PS₃O (50/50)-I₂ (1:1)) was added to anisole to prepare an anisole solution containing 30% by mass of the compound. The anisole solution was centrifuged at 4000 rpm for 15 minutes, and the presence or absence of precipitates was visually observed. As a result, no precipitate was observed.

From the results of these tests, it can be seen that the compound α is excellent in solubility.

### (5) Ion conductivity

Each of the compounds obtained in Production Examples 1 and 2, Examples 1 to 3 and 7, and Comparative Examples 1 to 3 was placed in a cylindrical container and sandwiched between cylindrical SUS shafts inserted from both ends of the container, and pressed with 333 MPa pressure at room temperature (23°C) to form a disk-shaped powder compact.

The ion conductivity was measured by connecting a lead wire to the powder compact while maintaining the pressed state. For the measurement, "Solartron 1470E Cell test system" manufactured by Solartron Analytical was used.

The ion conductivity was calculated based on the thickness of the press-molded powder compact. The results are shown in Table 1.

**[Table 1]**

| | | Ion conductivity [Scm⁻¹] |
|---|---|---|
| Prod. Ex. 1 | Li₃PS₃O | 4.2×10⁻⁵ |
| Example 1 | L₁₃PS₃O-I₂ (2:1) | 1.7×10⁻⁴ |
| Example 2 | L₁₃PS₃O-I₂ (4:3) | 4.6×10⁻⁵ |
| Example 3 | Li₃PS₃O-I₂ (1:1) | 8.0×10⁻⁶ |
| Example 7 | Li₃PS₄-Li₃PS₃O(50/50)-I₂ (1:1) | 1.4×10⁻⁵ |
| Prod. Ex. 2 | Li₃PS₄ | 4.9×10⁻⁴ |
| Comp. Ex. 1 | Li₃PS₄-I₂ (2:1) | 2.9×10⁻⁴ |
| Comp. Ex. 2 | Li₃PS₄-I₂ (4:3) | 1.7×10⁻⁴ |
| Comp. Ex. 3 | Li₃PS₄-I₂ (1:1) | 3.0×10⁻⁵ |

From Table 1, it can be seen that the compounds of Examples 1 to 3 and 7 have high ion conductivity, and are not significantly inferior to the compounds of Comparative Examples 1 to 3 (or the compounds of Production Examples 1 and 2).

### 2. Production of sheet

### (Example 8)

A slurry-like coating liquid having the following composition was prepared.

### [Composition of coating liquid]

Li₃PS₄ solid electrolyte (Li₃PS₄ obtained in Production Example 2): 95% by mass (0.76 g)

Compound obtained in Example 3 (Li₃PS₃O-I₂ (1:1)): 5% by mass (0.04 g)

Anisole: 76 parts by mass (0.61 mL) based on 100 parts by mass of the total amount of the above two components (total solid content)

Specifically, first, 0.50 mL of anisole was added to 0.04 g of the compound obtained in Example 3 to dissolve the compound. Next, 0.76 g of Li₃PS₄ solid electrolyte was added to the solution and the mixture was kneaded using a planetary stir defoaming device ("MAZERUSTAR KK 250S" manufactured by KURABO INDUSTRIES LTD.) under the following kneading condition.

### [Kneading condition]

Rate of rotation: 1600 rpm
Rate of revolution: 1600 rpm
Processing time: 180 seconds, 3 times

The sample was then subjected to treatment with an ultrasonic cleaner for 5 minutes and then kneaded again under the same kneading condition as described above. Then, 0.11 mL of anisole was further added to the sample, and the mixture was further kneaded under the same kneading condition as described above to obtain a slurry-like coating liquid (solid content concentration in the slurry: 57% by mass).

The obtained coating liquid was applied on a 5 cm×10 cm aluminum foil to form a coating film. Thereafter, the coating film was dried at 60°C for 10 hours to remove the solvent (anisole), thereby producing a solid electrolyte sheet (a sheet for a battery). (The same applies to Examples 9 to 12 and Comparative Examples 4 and 5 described later.) The thickness of the solid electrolyte sheet (dry coating film without aluminum foil) is 100 to 120 µm.

### (Example 9)

A solid electrolyte sheet was produced in the same manner as in Example 8 except that the composition of the coating liquid was changed to the following.

### [Composition of coating liquid]

Li₃PS₄ solid electrolyte (Li₃PS₄ obtained in Production Example 2): 92% by mass (0.736 g)

Compound obtained in Example 3 (Li₃PS₃O-I₂ (1:1)): 8% by mass (0.064 g)

Anisole: 73 parts by mass (0.59 mL) based on 100 parts by mass of the total amount of the above two components (total solid content)

### (Example 10)

A solid electrolyte sheet was produced in the same manner as in Example 8 except that the composition of the coating liquid was changed to the following.

### [Composition of coating liquid]

Li₃PS₄ solid electrolyte (Li₃PS₄ obtained in Production Example 2): 95% by mass (0.76 g)

Compound obtained in Example 7 (Li₃PS₄-Li₃PS₃O (50/50)-I₂ (1:1)): 5% by mass (0.04 g)

Anisole: 62 parts by mass (0.50 mL) based on 100 parts by mass of the total amount of the above two components (total solid content)

### (Example 11)

A solid electrolyte sheet was produced in the same manner as in Example 8 except that the composition of the coating liquid was changed to the following.

### [Composition of coating liquid]

Li₃PS₄ solid electrolyte (Li₃PS₄ obtained in Production Example 2) : 90% by mass (0.72 g)

Compound obtained in Example 7 (Li₃PS₄-Li₃PS₃O (50/50)-I₂ (1:1)): 10% by mass (0.08 g)

Anisole: 71 parts by mass (0.57 mL) based on 100 parts by mass of the total amount of the above two components (total solid content)

### (Example 12)

A solid electrolyte sheet was produced in the same manner as in Example 8 except that the composition of the coating liquid was changed to the following.

### [Composition of coating liquid]

Li₃PS₄ solid electrolyte (Li₃PS₄ obtained in Production Example 2): 95% by mass (0.76 g)

Compound obtained in Example 6 (Li₃PS_{7/2}O_{1/2}-I₂ (1:1)): 5% by mass (0.04 g)

Anisole: 62 parts by mass (0.50 mL) based on 100 parts by mass of the total amount of the above two components (total solid content)

### (Comparative Example 4)

A solid electrolyte sheet was produced in the same manner as in Example 6 except that the composition of the coating liquid was changed to the following.

### [Composition of coating liquid]

Li₃PS₄ solid electrolyte (Li₃PS₄ obtained in Production Example 2): 95% by mass (0.76 g)

Compound obtained in Comparative Example 3 (Li₃PS₄-I₂ (1:1)): 5% by mass (0.04 g)

Anisole: 87 parts by mass (0.70 mL) based on 100 parts by mass of the total amount of the above two components (total solid content)

### (Comparative Example 5)

A solid electrolyte sheet was produced in the same manner as in Example 6 except that the composition of the coating liquid was changed to the following.

### [Composition of coating liquid]

Li₃PS₄ solid electrolyte (Li₃PS₄ obtained in Production Example 2): 95% by mass (0.76 g)

Styrene-butadiene thermoplastic elastomer (SBS) ("TR2000" manufactured by JSR Corporation): 5% by mass (0.04 g)

Anisole: 82 parts by mass (0.66mL) based on 100 parts by mass of the total amount of the 2 components (total solid content)

### Evaluation

### (1) Sheet winding characteristics

Each of the solid electrolyte sheets obtained in Examples 8 to 12 and Comparative Examples 4 and 5 was wound around a cylindrical column having a diameter of 16 mm, and the presence or absence of breakage or peeling from the aluminum foil was visually observed. As a result, the solid electrolyte sheets obtained in Examples 8 to 12 did not break or peel off from the aluminum foil. Similarly, the solid electrolyte sheets obtained in Comparative Examples 4 and 5 did not break or peel off from the aluminum foil.

### (2) Ion conductivity

Each of the solid electrolyte sheets obtained in Examples 8 to 12 and Comparative Examples 4 and 5 was punched out togeter with aluminum foil into a disk shape, placed in a cylindrical container, and sandwiched between cylindrical SUS shafts inserted from both ends of the container, and pressed with 333 MPa pressure at room temperature (23°C).

The ion conductivity was measured by connecting a lead wire to the solid electrolyte sheet while maintaining the pressed state. For the measurement, "Cell test system 1470E" manufactured by Solartron Analytical was used. The ion conductivity calculated based on the thickness of the pressed solid electrolyte sheet is shown in Table 2.

**[Table 2]**

| | | Ion conductivity [Scm⁻¹] |
|---|---|---|
| Example 8 | Li₃PS₃O-I₂ (1:1) 5% by mass | 4.6×10⁻⁴ |
| Example 9 | Li₃PS₃O-I₂ (1:1) 8% by mass | 4.0×10⁻⁴ |
| Example 10 | Li₃PS₄-Li₃PS₃O(50/50)-I₂ (1:1) 5% by mass | 3.8×10⁻⁴ |
| Example 11 | Li₃PS₄-Li₃PS₃O(50/50)-I₂ (1:1) 10% by mass | 4.0×10⁻⁴ |
| Example 12 | Li₃PS_{7/2}O_{1/2}-I₂ (1:1) 5% by mass | 3.3×10⁻⁴ |
| Comp. Ex. 4 | Li₃PS₄-I₂ (1:1) 5% by mass | 2.3×10⁻⁴ |
| Comp. Ex. 5 | SBS 5% by mass | 1.1×10⁻⁴ |

### 3. Production of battery

### (Example 13)

LiCoO₂, Li₃PS₄ solid electrolyte (Li₃PS₄ obtained in Production Example 2), and acetylene black (AB) (manufactured by Denka Company Limited) were mixed at a weight ratio of LiCoO₂: Li₃PS₄: AB = 70: 30: 5 to obtain a mixture (total mass: 0.2 g). Separately, a solution obtained by dissolving 10 mg of the compound (Li₃PS₃O-I₂ (1:1)) obtained in Example 3 in 0.1 mL of anisole was prepared, and the above-described mixtures were added to this solution. The composition after addition of the solution is LiCoO₂: Li₃PS₄: AB: Li₃PS₃O-I₂ (1:1) = 70: 30: 5: 5. After the mixture was kneaded and treated with an ultrasonic cleaner for 5 minutes, approximately 0.05 mL of anisole was further added to the mixture, and kneaded again to obtain a slurry (solid content concentration: 59% by mass). The resulting slurry was applied onto a 5 cm x10 cm Al foil to form a coating film. The coating film was dried with 60°C for 10 hours and then vacuum-dried at 160°C for 3 hours. The obtained sheet was punched using a punching machine to obtain a positive electrode sheet having a diameter of 9.9 mm.

Li₃PS₄ solid electrolyte (Li₃PS₄ obtained in Production Example 2) (80 mg) was placed in a cylindrical container having SUS shafts on both sides, and compacted to form a solid electrolyte layer. Next, the positive electrode sheet obtained above was placed in a cylindrical container so as to stack on the solid electrolyte layer, and further, In foil and Li foil were placed in this order on the side opposite to the electrode sheet in the solid electrolyte layer in the cylindrical container, press-laminated, and restrained by a dedicated jig, to prepare a cell for testing (positive electrode half-cell).

### (Example 14)

A cell was produced in the same manner as in Example 13, except that the compound obtained in Example 7 (Li₃PS₄-Li₃PS₃O (50/50)-I₂ (1:1)) was used in place of the compound obtained in Example 3.

### (Comparative Example 6)

A cell was produced in the same manner as in Example 13, except that the compound obtained in Comparative Example 3 (Li₃PS₄-I₂ (1:1)) was used in place of the compound obtained in Example 3.

### (Comparative Example 7)

A cell was produced in the same manner as in Example 13, except that a styrene-butadiene-based thermoplastic elastomer (SBS) CTR2000" manufactured by JSR Corporation) was used in place of the compound obtained in Example 3.

### Evaluation

### (1) Initial charge/discharge characteristics (initial charge/discharge curve)

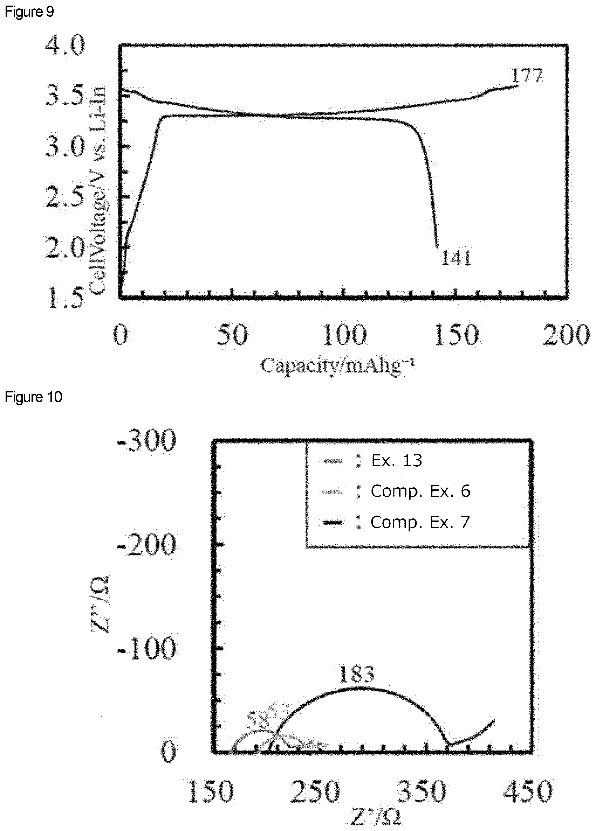

The initial charge/discharge curves (0.1 C) measured for each of the cells obtained in Examples 13 and 14 and Comparative Examples 6 and 7 are shown in Figure 8 (the cells of Example 13 and Comparative Examples 6 and 7) and Figure 9 (the cell of Example 14), respectively. Here, 1C rate (the amount of current that discharges the total capacity of the battery in one hour) is 0.25 mA in the cell of Example 13, 0.29 mA in the cell of Example 14, 0.39 mA in the cell of Comparative Example 6, and 0.32 mA in the cell of Comparative Example 7.

Figure 8 and Figure 9 show that the cells of Examples 13 and 14 can be charged and discharged without significant side reactions.

### (2) AC impedance (after initial charge)

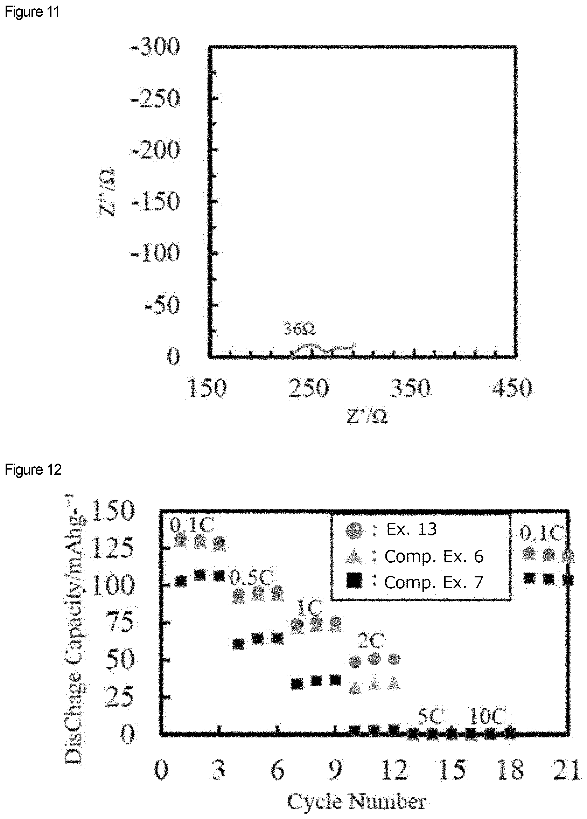

For each of the cells obtained in Examples 13 and 14 and Comparative Examples 6 and 7, AC impedance was measured using "Solartron 1470E Cell test system" manufactured by Solartron Analytical, and a Cole-Cole plotted was obtained. Results (Cole-Cole plot) are shown in Figure 10 (the cells of Example 13 and Comparative Examples 6 and 7) and Figure 11 (the cell of Example 14), respectively.

From Figure 10 and Figure 11, it can be seen that the cells of Examples 13 and 14 have a small interfacial resistance after charging.

### (3) Cycle characteristics

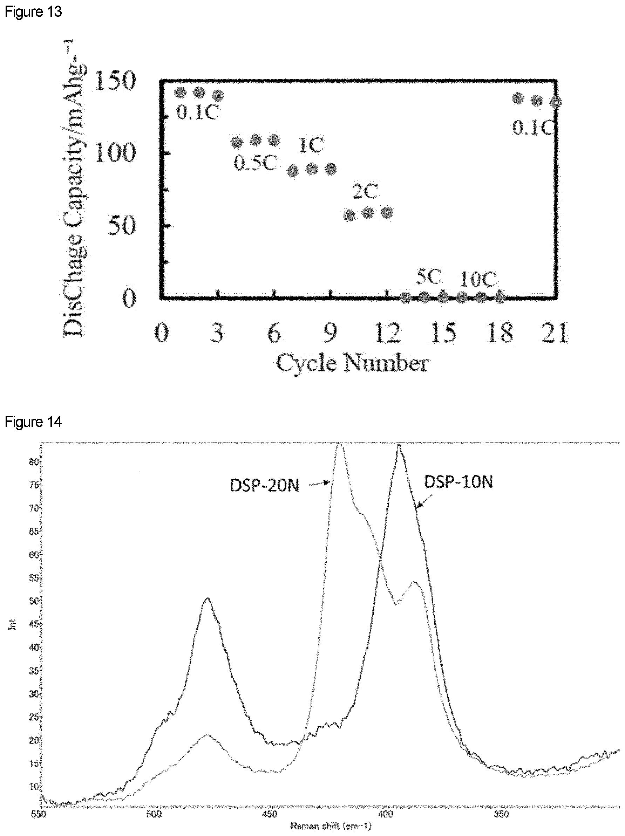

The results of the cycle characteristics measured for each of the cells obtained in Examples 13 and 14 and Comparative Examples 6 and 7 are shown in Figure 12 (the cells of Example 13 and Comparative Examples 6 and 7) and Figure 13 (the cell of Example 14), respectively.

From Figure 12 and Figure 13, it can be seen that the cells of Examples 13 and 14 have good cycle characteristics.

In the following tests, solid electrolytes containing S as a constituent element and further having a bond between P and N were synthesized by the methods of Production Examples 4 and 5 in accordance with the literature "Solid State Ionics 304 (2017) 85-89." Next, as shown in Examples 15 and 16 below, the solid electrolyte was reacted with iodine to synthesize a compound containing P and S as constituent elements, and having a group containing N bonded to the P and a disulfide bond.

### (Production Example 4)

Li₂S (3N powder 200 Mesh, manufactured by Furuuchi Chemical Corporation), P₂S₅ (manufactured by Merck KGaA), and Li₃N (manufactured by Hiroshima Wako Co.,Ltd.) were mixed at a molar ratio of Li₂S: P₂S₅: Li₃N = 60: 25: 10 and reacted by mechanical milling under the following condition to obtain 60Li₂S-25P₂S₅-10Li₃N (glass powder, referred to as "LPS-10N").

### [Mechanical milling condition]

Planetary ball mill: P7, manufactured by Fritsch GmbH
Sample mass: 1.5 g
Mode: Dry milling
Ball: made of ZrO₂, 10 mm in diameter, number of balls is 10
Pot: made of ZrO₂, 45 mL in capacity
Rate of rotation: 510 rpm
Processing time: 45 hours

### (Production Example 5)

Li₂S (3N powder 200 Mesh, manufactured by Idemitsu Kosan Co.,Ltd.), P₂S₅ (manufactured by Merck KGaA), and Li₃N (manufactured by Hiroshima Wako Co.,Ltd.) were mixed at a molar ratio of Li₂S: P₂S₅: Li₃N = 45: 25: 20, and reacted by the same mechanical milling as in Production Example 4 to obtain 45Li₂S-25P₂S₅-20Li₃N (glass powder, referred to as "LPS-20N").

### (Example 15)

A compound was obtained in the same manner as in Example 1, except that I₂ (manufactured by Kojundo Chemical Laboratory Co., Ltd., 5N irregular grains; use after pulverizing in a mortar) was added to LPS-10N obtained in Production Example 4 at a molar ratio of LPS-10N: I₂ = 1: 1 (referred to as "DSP-10N").

### (Example 16)

A compound was obtained in the same manner as in Example 1, except that I₂ (manufactured by Kojundo Chemical Laboratory Co., Ltd., 5N irregular grains; use after pulverizing in a mortar) was added to LPS-20N obtained in Production Example 5 at a molar ratio of LPS-20N: I₂ = 1: 1 (referred to as "DSP-20N").

### Evaluation

### (1) Raman spectroscopy

For the compounds obtained in Examples 15 and 16 (DSP-10N and DSP-20N), the microscopic Raman spectroscopy same as used for the compound obtained in Production Example 1 was conducted.

The Raman spectra obtained by the microscopic Raman spectroscopy are shown in Figure 14.

From Figure 14, a peak near the Raman shift of 475 cm⁻¹ (peak A described above) derived from the disulfide (S-S) bond of P-S-S chains was confirmed for both the compounds obtained in Examples 15 and 16 (DSP-10N and DSP-20N).

### (2) X-ray photoelectron spectroscopy (XPS)

For the compounds obtained in Examples 15 and 16 (DSP-10N and DSP-20N) were subjected to the XPS measurement using the following apparatus and condition.
Apparatus: VersaProbell (ULVAC-PHI)
Condition:
· Excitation X-ray: monochromatic AlKα 1486.6 eV
▪ X-ray diameter and power 200 µm in diameter, 50 W, 15 KV (fixed at each point)
▪ Photoelectron detection angle: 45°
· Horizontal axis (binding energy): charge neutralization correction was performed with C-C at 284.8 eV for all elements. . Measurements were carried out on the outermost surface of the sample and on the sputtered surface of GCIB (gas cluster ion beam), respectively. GCIB treatment condition was 10 kV, 30 nA, 2x2 mm², and 5 min.
▪ Data processing: 5-points smoothing

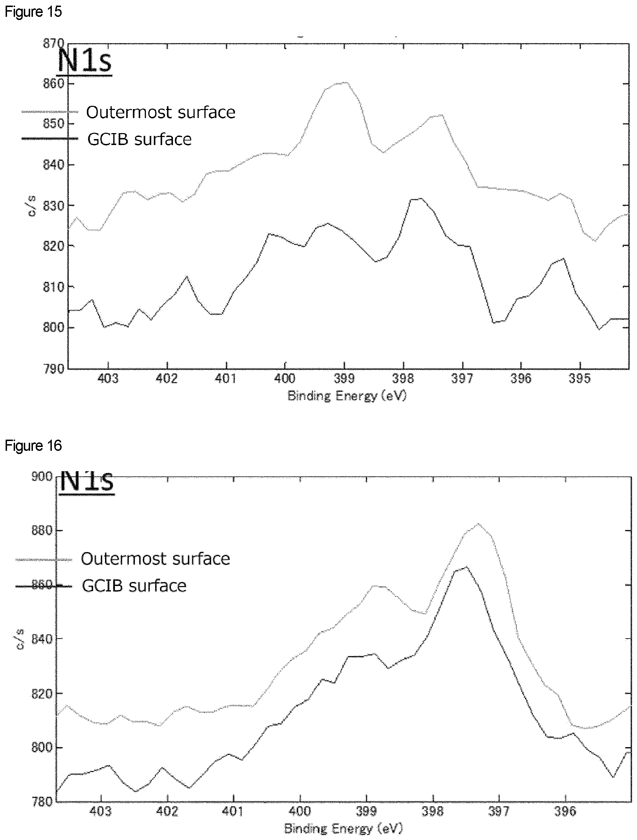

Figure 15 shows the measurement results of Example 15, and Figure 16 shows the measurement results of Example 16. It was confirmed that N was contained as a constituent element in both the compounds obtained in Examples 15 and 16 (DSP-10N and DSP-20N) from the results of XPS measurement. For example, according to the aforementioned literature "Solid State Ionics 304 (2017) 85-89", for a material corresponding to LPS-10N (Production Example 4), the peak of N derived from a P-N=P bond is observed at 396.9 eV and the peak of N derived from a P₂-N-P bond at 398.3 eV. In the compounds obtained in Examples 15 and 16 (DSP-10N and DSP-20N), although a slight peak shift was observed due to multimerization, a peak was observed at a position dose to 396.8 eV and 398.3 eV (see Figures 15 and 16). The elemental composition ratios were determined and the results are shown in Table 3, and it was confirmed that around 5 mol% of N element be presented therein.

**[Table 3]**

| | Elemental composition [mol%] | | | | | |
|---|---|---|---|---|---|---|
| | Outermost surface | | | Sputtered surface of GCIB | | |
| | N | P | S | N | P | S |
| Example 15 | 5.3 | 17.0 | 77.7 | 2.7 | 18.6 | 78.7 |
| Example 16 | 5.4 | 19.6 | 75 | 4.8 | 21.4 | 73.8 |

From the results above, it is estimated that the compounds obtained in Examples 15 and 16 have the structure represented by any of the following formulas (13) and (14).

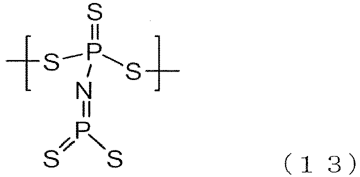

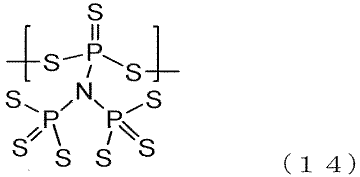

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese applications) on the basis of which the present application claims Paris convention priority are incorporated herein by reference in its entirety.

## Claims

1. A compound comprising:
P and S as constituent elements,
a group comprising one or more elements selected from the group consisting of O, N and halogen, the group bonding to the P, and
a disulfide bond.

2. The compound according to claim 1, wherein the group comprises O.

3. The compound according to claim 1 or 2, having a peak derived from a disulfide bond which bonds two P's in Raman spectroscopy.

4. The compound according to any one of claims 1 to 3, having a peak derived from a PSₓO_{y} structure (where 1 ≤ x and 0 < y) in ³¹P-NMR measurement.

5. The compound according to claim 4, wherein the peak derived from the PSₓO_{y} structure is a peak derived from a PS₃O structure.

6. The compound according to any one of claims 1 to 5, comprising a structure represented by the following formula (1): 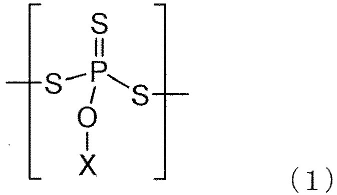 wherein in the formula (1), X is an arbitrary group.

7. The compound according to any one of claims 1 to 6, comprising a structure represented by the following formula (1) and a structure represented by the following formula (7): 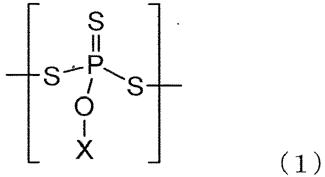 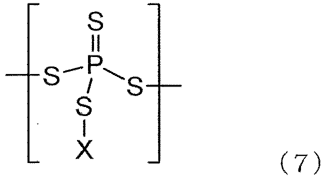 wherein in the formulas (1) and (7), X is an arbitrary group, and a plurality of X's is the same as or different from each other.

8. The compound according to any one of claims 1 to 7, comprising one or more elements selected from the group consisting of Li, Na, Mg, and Al as constituent elements.

9. The compound according to any one of claims 1 to 8, wherein the compound is obtained by adding an oxidizing agent to a raw material compound comprising P and S, and one or more elements selected from the group consisting of O, N, and halogen as constituent elements, and then reacting the raw material compound and the oxidizing agent.

10. The compound according to any one of claims 1 to 9, comprising a disulfide bond formed in accordance with the following Reaction Scheme (9): 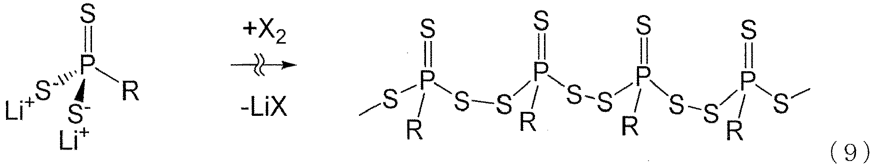 wherein in the Scheme, R is a group comprising one or more elements selected from the group consisting of O, N, and halogen; and X is halogen.

11. The compound according to claim 10, wherein X in the Reaction Scheme (9) is iodine (I), fluorine (F), chlorine (CI), or bromine (Br).

12. A binder for a battery, comprising the compound according to any one of claims 1 to 11.

13. The binder for a battery according to claim 12, comprising a halogen.

14. The binder for a battery according to claim 13, wherein the halogen is I or Br.

15. A composite electrode layer for a battery or an electrolyte layer for a battery comprising the binder for a battery according to any one of claims 12 to 14.

16. The composite electrode layer for a battery or the electrolyte layer for a battery according to claim 15, further comprising a solid electrolyte.

17. A battery sheet comprising one or more layers selected from the group consisting of the composite electrode layer for a battery and the electrolyte layer for a battery according to claim 15 or 16.

18. A battery comprising the compound according to any one of claims 1 to 11.

19. A method for producing a compound, comprising:
adding an oxidizing agent to a raw material compound comprising P and S, and one or more elements selected from the group consisting of O, N, and halogen as constituent elements; and
reacting the raw material compound and the oxidizing agent.

20. The method for producing a compound according to claim 19, wherein the raw material compound comprises one or more elements selected from the group consisting of Li, Na, Mg, and Al as constituent elements.

21. The method for producing a compound according to claim 19 or 20, wherein the raw material compound has a PSₓO_{y} structure (where 1 ≤ x and 0 < y).

22. The method for producing a compound according to claim 21, wherein the PSₓO_{y} structure is a PS₃O structure.

23. The method for producing a compound according to any one of claims 19 to 22, wherein the oxidizing agent is a halogen simple substance.

24. The method for producing a compound according to claim 23, wherein the halogen simple substance is I₂ or Br₂.

25. The method for producing a compound according to any one of claims 19 to 24, wherein the raw material compound and the oxidizing agent are reacted by one or more energies selected from the group consisting of physical energy, thermal energy, and chemical energy.

26. The method for producing a compound according to any one of claims 19 to 24, wherein the raw material compound and the oxidizing agent are reacted in a liquid.
